Europäisches Patentamt

European Patent Office

Office européen des brevets

(19)

(11) Publication number: **0 200 076**

**A2**

(12) # EUROPEAN PATENT APPLICATION

(21) Application number: **86105118.3**

(22) Date of filing: **14.04.86**

(51) Int. Cl.⁴: **F 16 F 1/36**
**B 29 C 67/14**

(30) Priority: **17.04.85 SE 8501875**

(43) Date of publication of application:
**05.11.86 Bulletin 86/45**

(84) Designated Contracting States:
**AT BE CH DE FR GB IT LI NL**

(71) Applicant: **ASEA AB**

**S-721 83 Västeras(SE)**

(72) Inventor: **Bergstedt, Ulf**
**PL 7723**
**S-951 90 Lulea(SE)**

(74) Representative: **Boecker, Joachim, Dr.-Ing.**
**Rathenauplatz 2-8**
**D-6000 Frankfurt a.M. 1(DE)**

(54) **Beam of a plastic reinforced with a fibre material and method for its manufacture.**

(57) Beam of a plastic reinforced with a fibre material, which beam has a curved shape in the longitudinal direction and a cross-section decreasing in the longitudinal direction from the central part towards the ends of the beam. The beam takes particularly the form of a leaf spring. The reinforcement consists of a fibre material (11,12,13,14,15), oriented substantially in the longitudinal direction of the beam, with folded parts (11b,12b,13b,14b) located on both sides of and at different distances from the central part of the beam. Fibre material (12,13,14) which forms a folded part (12b,13b,14b) in the interior of the beam surrounds fibre material (11,12,13) which forms those folded parts (11b,12b,13b) in the interior of the beam which are located nearer to the central part of the beam than the folded part of the former mentioned fibre material.

FIG.5

EP 0 200 076 A2

April 3, 1986
21 719 PE
0200076

ASEA AB
S-721 83 Västeras /  Sweden


Beam of a plastic reinforced with a fibre material and
method for its manufacture

The invention relates to a beam of a plastic reinforced with
a fibre material according to the precharacterising part of
claim 1. Such a beam is known from the US-A-4,414,049. The
invention relates also to a method for the manufacture of
such a beam.

The reinforcement of the beam described in the US-A-
4,414,049 consists of a plurality of flat loops of the fibre
material, having ends with folded fibre material. The loops
are arranged with the main part of the fibre material
oriented in the longitudinal direction of the beam and the
ends of the loops are located at a successively increasing
distance from the central part of the beam. When manufacturing the reinforcement, a strand of the fibre material is applied together with the resin around pins on a winding machine, in which the pins are subjected to a reciprocating
rotary movement. Pins, which are located at a successively
increasing distance from the centre of rotation, are successively inserted into the winding path for formation of increasingly larger loops having parts with folded fibre material located at a successively increasing distance from the
centre of rotation. After completion of the winding operation, the fibre material with resin is arranged in the cavity of a forming tool in the geometry given to the rein-

April 3, 1986
0200076

forcement during the winding operation, that is, without any mutual displacement of parts of the fibre material taking place after the winding operation. The wound product is cured in the forming tool into a beam having a shape which is curved in the longitudinal direction. In the completed beam, all parts with folded fibre material are located near the surface layer of the beam.

The object of the invention is to develop a fibre material reinforced plastic beam of the above-mentioned kind which, upon mechanical load, is capable of resisting considerably greater stresses than the known beam.

To achieve this aim the invention suggests a fibre material reinforced plastic beam according to the introductory part of claim 1, which is characterized by the features of the characterizing part of claim 1.

Further developments of the beam according to the invention are characterized by the features of the claims 2 to 6.

A method to manufacture a beam according to the invention is characterized by the features of the characterizing part of claim 7.

Further developments of this method are characterized by the features of the claims 8 to 10.

The favourable property of the beam according to the invention to resist great mechanical stresses is obtained by arranging the fibre material, which is oriented substantially in the longitudinal direction of the beam, with folded parts which are located in the interior of the beam and not, as in the known case, near the surface layer of the beam.

The wrappings in the beam are preferably arranged with at least substantially coinciding winding axes. Because the wrappings are manufactured of several turns of the fibre material, the fibre material can be arranged in an efficient manner in stretched state without slack parts. The shape of the reinforcement in the form of several wrappings having different extension makes it possible in a simple manner to accommodate a desired fibre quantity in each cross-section along the length of the beam.

The invention is particularly suited for beams in the form of springs, especially in the form of leaf springs. The longitudinal section of the leaf spring is thereby preferably given a parabolic shape because such a shape results in a spring having a constant stress over the entire spring. The beam is preferably provided with end loops for taking up axial forces. In that connection it is advantageous to arrange, inside each end loop, a wrapping of the fibre material or some other kind of reinforcement for the end loops, such as one of steel, around the web of the beam.

According to one method of manufacturing a beam according to the invention, the fibre material is wound into a plurality of wrappings having different extension in that direction in which the main part of the fibre material is oriented during the winding operation. The winding operation is performed in a winding machine with separate winding-on members for the fibre material for each wrapping, the winding-on members being mutually arranged at a successively increasing distance from a preferably common winding axis for the wrappings. Each wrapping, with the exception of the wrapping located nearest the winding axis, is then brought to surround all wrappings having a shorter extension than the wrapping in question in that direction in which the main part of the fibre material is oriented. The fibre material is impregnated with a thermosetting resin prior to or after the winding and is placed in a forming tool having a cavity adapted to the curved shape of the beam with the main part of the fibre material oriented in the longitudinal direction of the beam, the beam thereafter being shaped and the resin being subjected to curing. Preferably, the fibre material is stretched in the longitudinal direction of the beam in conjunction with being placed in the forming tool in order to remove slack portions of the wrappings, if any.

The fibre material preferably consists of glass fibre but may also consist of fibres of different natural and synthetic materials such as cotton, polyethyleneglycol terephthalate, polyacrylic nitrile, polyamide, aramide and carbon. The fibre material may advantageously be used in the form of a thread or strand of the fibres.

The plastic is preferably a solvent-free thermosetting resin, such as, for example, an unsaturated polyester resin, an epoxy resin or a polyurethane resin of such types as are conventionally used in the manufacture of glass-fibre reinforced plastic. Both thermosetting resins and resins which are curable at room temperature may be used. The resin can be supplied to the fibre material in different ways. Thus, the fibre material can be pre-impregnated with the resin and the resin possibly be subjected to a partial curing before the fibre material is wound into wrappings or the fibre material is impregnated with the resin after the fibre material has been wound into wrappings. If the resin is supplied to the fibre material after it has been wound into wrappings, the impregnation is carried out preferably as a vacuum impregnation.

The invention will now be described in greater detail with reference to the accompanying drawings showing - by way of example - in

April 3, 1986
21,719 PE
0200076

Figure 1 a top view of a winding device for the manufacture of a beam according to the invention in the form of a leaf spring, during the manufacture of a wrapping of the reinforcing fibre material for the spring,

Figure 2 a side view of the device of Figure 1, in a direction perpendicular to the axis of rotation of the device,

Figure 3 the device of Figure 1, seen from the inside, in a direction parallel to the axis of rotation of the device,

Figure 4 the same device as in Figure 1-3, in the same view as in Figure 3, showing several completed wrappings and a wrapping under manufacture,

Figure 5 shows a tool for the manufacture of a beam according to the invention,

Figure 6 a part in an embodiment of a beam according to the invention,

Figure 7 and 8 different modifications of the device according to Figure 1-3 in the same view as in Figure 3 and 4.

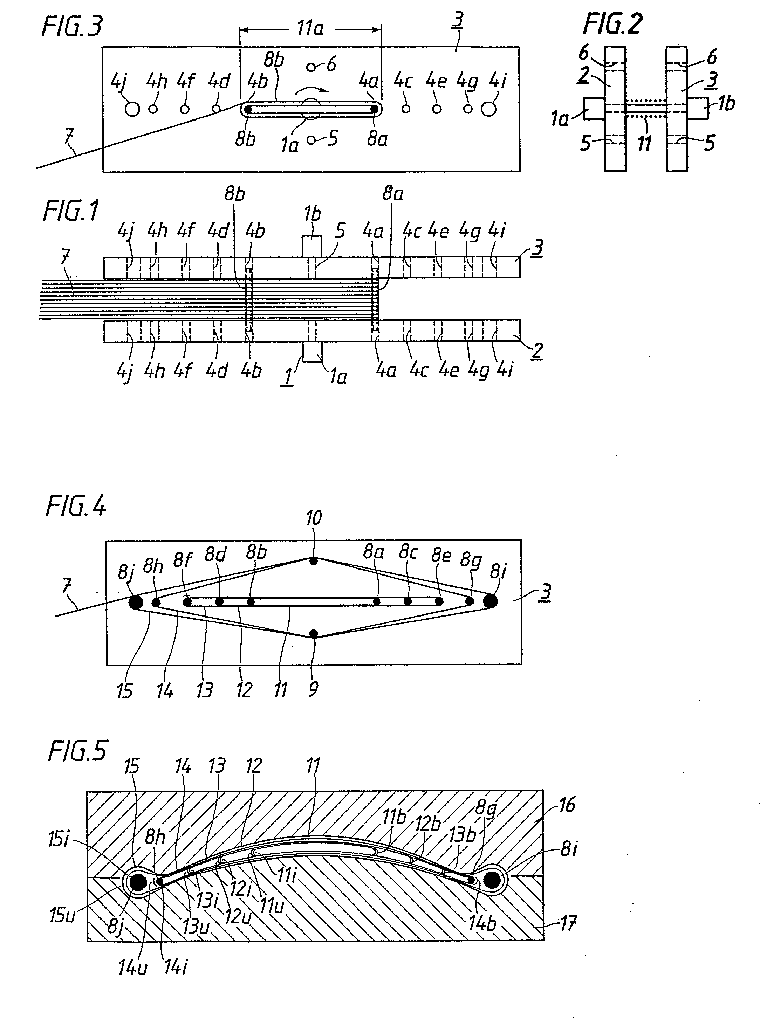

The winding device according to Figures 1-3 comprises a horizontal axis of rotation 1 and two vertical end walls in the form of plates 2 and 3, arranged perpendicular to the axis of rotation and in spaced relationship to each other. The axis 1 consists of parts 1a and 1b which are each fixed to either plate. Each plate is provided with a plurality of of holes 4a,4c,4e,4g,4i and 4b,4d,4f,4h,4j, arranged in a row extending on either side of the axis of rotation. The axes of the holes are parallel to the axis of rotation. The holes 4a and 4b are located at the same distance from the axis of rotation. This is also true of the respective distances of hole pairs 4c and 4d, 4e and 4f, 4g and 4h, and 4i and 4j. In addition, each plate is provided with holes 5 and 6 the axes of which extend parallel to the axis of rotation and which are located on either side of the axis of rotation in such a way that their connecting line is perpendicular to the direction of the row of holes 4a-4j. Through each hole 4a-4j, a pin 8 is insertable. Figure 1 shows only two such pins 8a and 8b in the holes 4a and 4b, respectively, but in an analogous manner pins 8c,8d,8f,8g,8h,8i and 8j are insertable into the holes 4c,4d,4e,4f,4g,4h,4i and 4j. In the same way, pins 9 and 10 are insertable into the holes 5 and 6, respectively. The pins serve as winding-on members for the fibre material 7 for the winding of wrappings of the fibre material. The fibre material consists of several glass fibre rovings, for example with a weight of 2400g per km and a diameter of 20 μm of the individual fibre. First a wrapping 11 is manufactured by winding the fibre material, for example 10 turns around the pins 8a and 8b. The extension of the wrapping is designated 11a in Figure 3. By the extension of the wrapping is meant the external dimension of the completely wound wrapping in the direction in which the external dimension is greatest.

After completion of the winding of the wrapping 11, the pins 8c and 8d are inserted between the end walls 2 and 3 and, as will be clear from Figure 4, a wrapping 12 is manufactured around these pins by winding on them the fibre material. In an analogous way, a wrapping 13 is thereafter manufactured around the pins 8e and 8f after these pins have been inserted. The next wrapping 14 is manufactured by wrapping the fibre material around the pins 8g, 8h, 9 and 10 after these pins have been inserted. Finally, the pins 8i and 8j are inserted, and the outermost wrapping 15 is wound around the pins 8i, 8j, 9 and 10. In the exemplified case, all the wrappings are built up of 10 turns each of the fibre material. The fibre material in one wrapping may be connected continuously with the fibre material in an adjacent wrapping. The fibre material may also be cut off after the winding of each wrapping so that each wrapping constitutes a separate unit. The fibre material is impregnated with an epoxy resin before it is supplied to the winding device for the manufacture of the wrappings 11-15. The epoxy resin may consist of 100 parts by weight of a resin built up of bisphenol A (e.g. XB 3052A from CIBA AG, Switzerland) and 38 parts by weight curing agent of amine type (e.g. XB 3052B from CIBA AG). In Figure 4 each wrapping 11-15 is shown by one line only for the sake of clarity of the figure. In reality, however, each wrapping has a certain thickness and an extension 12a,13a,14a and 15a, respectively, analogous to that of wrapping 11 shown in Figure 3.

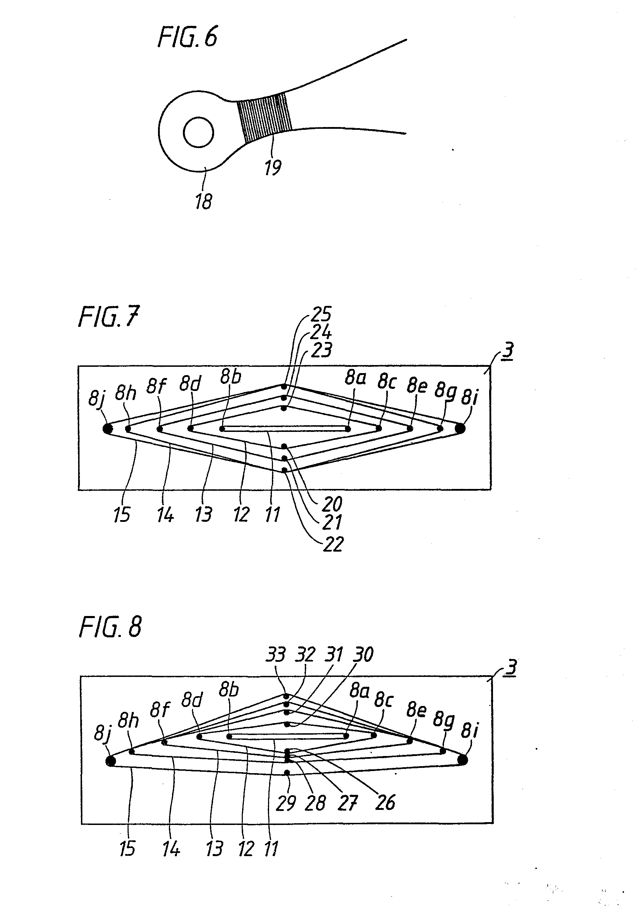

The completely wound wrappings of the impregnated fibre material are thereafter - according to Figure 5 - placed in a forming tool comprising tool halves 16 and 17 for forming of the leaf spring. Before this is done the pins 8a-8f and 9 and 10 in the exemplified case are removed, that is, the pins 8g,8h,8i and 8j remain in the wrappings. In conjunction with the impregnated fibre material being placed in the forming tool, it is stretched to remove any slack portions and bent when being mounted in the forming tool. The pins 8g and 8h are allowed to remain in the wrappings until immediately prior to full compression of the tool halves 16 and 17, whereas the pins 8i and 8j are allowed to remain in the tool also during the curing of the resin in the tool, that is, until the manufacture of the leaf spring has been completed. Only thereafter these pins are removed, whereby end loops 18 (Figure 6) are produced on the leaf spring. The curing of the resin is performed at a temperature of $80^{o}$C for a period of 120 minutes. The glass fibre content in the cured product suitably amounts to 75% by weight. A spring manufactured in accordance with Figures 1-5 may without difficulty be formed with such a cross-section, decreasing from

April 3 1986
0200076

the mid-point towards the ends, that the stress is approximately constant along the entire spring. The wrappings 14 and 15, which have been applied by utilizing the pins 9 and 10, facilitate the attainment of a uniform and predetermined prestress in the spring, which permits the manufacture of a spring with a predetermined ability to absorb stresses. The leaf spring produced has transverse fibre portions, in Figure 5 designated 11b,12b,13b,14b for the wrappings 11,12,13,14. These fibre portions markedly increase the shear strength of the leaf spring. From Figure 5 it is also clear that the wrappings are located in a spaced relationship in the longitudinal direction of the leaf spring, that is, in the direction in which the main part of the fibre material is oriented. The insides of the wrappings 11-15 are designated 11i-15i and the outsides of the wrappings are designated 11u-15u. Thus, distances exist between 11u and 12i, between 12u and 13i, between 13u and 14i, and between 14u and 15i, respectively . Each such distance is preferably greater than the thickness of the wrapping whose outer side limits the distance on one side.

In the example described, only the pins 8i and 8j are retained in that product which is cured in the tool. However, it is possible to allow several or all pins 8a-8j to remain in the end product if the tool is formed in a manner necessary therefor. Like the rest of the leaf spring, the pins may then suitably be manufactured of fibre-reinforced plastic. In the shown case, the tool has a cavity which is completely surrounded by the tool halves 16 and 17 and which has the same shape as the spring to be manufactured.

To counteract splitting and to increase the shear stress resistance, according to Figure 6 the formed and cured leaf spring can be provided, at each end loop 18, with a reinforcement in the form a wrapping 19 of the fibre material impregnated with the resin, the resin being cured in a separate operation.

In the embodiment described above with reference to Figures 1-5, the manufacture of a symmetrical spring is described, whereby the holes and the pins are located pairwise, for example holes 4a and 4b and pins 8a and 8b, at the same distance from the axis of rotation 1. When manufacturing unsymmetrical springs and beams, the holes and the pins, respectively, in one or more pairs may be arranged to be located at different distances from the axis of rotation so that the mid-points or centres of gravity of the wrappings do not coincide.

In accordance with the modification of the manufacture of the wrappings shown in Figure 7, several pins 20-25 are used which are arranged in such a way that for each wrapping the directions from each of the pins 20-25 to their associated pins 8c-8j for the manufacture of the same wrapping make an obtuse angle. At least the pins 20-25 are removed prior to the forming. Such a modification increases the flexibility during the manufacture of beams having differently curved shapes. The same is true of the embodiment shown in Figure 8, in which the pins 8a-8j are arranged in rows with a curved shape which corresponds to the curved shape of the leaf spring to be manufactured. These pins can be retained in the wrappings during the pressing. Those pins 26-33 which are arranged so that for each one the directions to the associated pins 8c-8j make obtuse angles are withdrawn prior to the forming of the spring. The fibre material around the pins 26-33 is then brought together towards the centre and is stretched when the material is placed in the tool whereas the fibre material around the pins 8a-8j maintains its position.

In the embodiment described, instead of the exemplified epoxy resin there can be used, among other things, an unsaturated polyester resin containing 57 parts by weight of a reaction product of maleic acid, isophthalic acid and neopentyl glycol, whereby per mole of maleic acid there are used 1.5 moles isophthalic acid and 2.7 moles neopentyl glycol, and further containing 43 parts by weight styrene and 1 parts by weight bensoyl peroxide. The curing of the resin can be carried out at a temperature of 120°C for a few hours.

Instead of using a fibre material 7 in the case illustrated in Figure 4, in which each wrapping 11-15 is manufactured by winding of several turns, for example 10 turns, around each pair of pins 8a-8b, 8c-8d, 8e-8f, 8g-8h and 8i-8j, a sufficiently thick fibre strand may be used for the fibre material to be wound only once around each pair of pins into one single continuous coherent product, which contains the necessary amount of reinforcing material. The fibre strand is than fixed to the pin 8b and is wound first one turn around the pins 8a and 8b. After insertion of pins 8c and 8d, the strand is wound from pin 8b around pin 8c and thereafter around pin 8d. After insertion of pins 8e and 8f, the strand is wound from pin 8d around pin 8e and thereafter around pin 8f. After insertion of pins 8g, 8h, 9 and 10, the strand is wound from pin 8f around pin 8g, thereafter around pin 9, thereafter around pin 8h, and thereafter around pin 10. After insertion of pins 8i and 8j, the strand is wound from pin 10 around pin 8i, thereafter around pin 9, thereafter around pin 8j, and finally around pin 10, where the strand is cut. The entire wound fibre material, which has been impregnated in advance with the exemplified epoxy resin, is thereafter placed in the forming tool shown in Figure 5, after the pins 8a-8f and 9 and 10 have first been removed, that is, with the pins 8g,8h,8i and 8j remaining in the wrappings. In conjunction with the impregnated fibre material being placed in the forming tool, it is stretched to remove any slack portions and curved when being mounted in the forming tool. The pins 8g and 8h are allowed, as in the previously described case, to remain in the wrappings until immediately prior to compression of the tool halves 16 and 17, whereas the pins 8i and 8j are allowed to remain in the tool also during the curing of the resin, that is, until the manufacture of the leaf spring is completed. Only thereafter these pins are removed, and end loops 18 (Figure 6) are produced on the spring.

21 719 PE

C250076

## CLAIMS

1. Beam of a plastic reinforced with a fibre material, which beam has a curved shape in its longitudinal direction and a cross-section decreasing in the longitudinal direction of the beam from the central part towards the ends along at least a substantial part of this length, and in which the reinforcement comprises a fibre material (11,12,13,14,15) oriented substantially in the longitudinal direction of the beam with folded parts (11b,12b,13b,14b) located on both sides of and at different distances from the central part of the beam, c h a r a c t e r i z e d in that fibre material (12,13,14) which forms a folded part (12b,13b,14b) in the interior of the beam surrounds the fibre material (11,12,13) which forms those folded parts (11b,12b,13b) in the interior of the beam which are located nearer to the central part of the beam than the folded part of the former mentioned fibre material.

2. Beam according to claim 1, c h a r a c t e r i z e d in that the reinforcement consists of a plurality of flat wrappings (11-15) of several turns of the fibre material, which are arranged with winding axes perpendicular to the longitudinal direction of the beam, whereby a wrapping (11) with the shortest extension in the longitudinal direction of the beam is located at the central part of the beam and the other wrappings (12-15) are formed with a successively increasing extension in the longitudinal direction of the beam with each·such other wrapping surrounding wrappings having a shorter extension in the longitudinal direction of the beam than the wrapping in question itself.

3. Beam according to claim 2, c h a r a c t e r i z e d in that the wrappings are arranged with at least substantially coinciding winding axes.

4. Beam according to any of claims 1-3, c h a r a c t e r-
i z e d  in that it constitutes a leaf spring.

5. Beam according to any of the preceding claims, c h a-
r a c t e r i z e d  in that it is provided with end loops
(18) for taking up axial forces.

6. Beam according to claim 5,  c h a r a c t e r i z e d
in that the beam adjacent each end loop (18) is provided
with a wrapping (19) of the fibre material around the web of
the beam.

7. Method of manufacturing a beam according to any of the
preceding claims, c h a r a c t e r i z e d  in that the fi-
bre material is wound into a plurality of wrappings (11-15)
consisting of one several turns of the fibre material, that
said wrappings have different extensions in a direction in
which the main part of the fibre material is oriented during
the winding operation in a winding device with separate
winding-on members (8a-8j,9,10,20-33) for the fibre material
in each wrapping (11-15), that the winding-on members are
mutually arranged at a successively increasing distance from
a common winding axis for the winding, that each wrapping
(12-15), with the exception of the wrapping (11) located
nearest the winding axis, is brought to surround all wrappings with a shorter extension in the direction in which the
main part of the fibre material is oriented than the extension of the wrapping in question, that the fibre material
prior to or after the winding into wrappings is impregnated
with a curable resin and placed in a forming tool (16,17)
having a cavity which is adapted to the curved shape of the
beam, whereby the main part of the fibre material is
oriented in the longitudinal direction of the beam, and that
thereupon the beam is formed while the resin is subjected to
curing.

April 3, 1986
21 719 PE
0200076

8. Method according to claim 7, c h a r a c t e r i z e d in that the wrappings (11-15) are wound in a winding device comprising an axis of rotation (1) coinciding with the winding axis of the wrappings, two end walls (2,3) being perpendicular to the axis of rotation and arranged in spaced relationship to each other, and separate winding-on members for the fibre material for each wrapping in the form of a plurality of pins (8a-8j,9,10,20-33), which extend parallel to the axis of rotation and are arranged at least partially in a row, said pins on each side of the axis of rotation being arranged at a successively increasing distance from the axis of rotation and being insertable, through at least one end wall, into the space between the two end walls, and that each wrapping of the fibre material is wound around at least two pins inserted into the space between the end walls and located on different sides of the axis of rotation.

9. Method according to claim 7 or 8, c h a r a c t e r i z e d in that the fibre material in at least the outermost wrapping (15) is held stretched in the forming tool (16,17) during the curing of the resin.

10. Method according to any of claims 7-9, c h a r a c t e r i z e d in that those pins (8i-8j), located on either side of the axis of rotation of the winding device furthest away from the axis of rotation and on which the outermost wrapping (15) is wound, are allowed to remain in the fibre material when applying it in the forming tool (16,17) and are utilized to hold the outermost wrapping stretched in the forming tool during the curing of the resin.

April 03 1986
21 719 PE
0200076

FIG.3

FIG.2

FIG.1

FIG.4

FIG.5

0200076
April 3, 1986
21 719 PE

FIG.6

18    19

FIG.7

3

25 24 23

8j 8h 8f 8d 8b    8a 8c 8e 8g 8i

15  14  13  12  11    20
21
22

FIG.8

3

33 32 31 30

8j 8h 8f 8d 8b    8a 8c 8e 8g 8i

29 28 27 26

15  14  13  12  11